# EUROPÄISCHE PATENTSCHRIFT

(11) **EP 1 596 961 B1**
(45) Veröffentlichungstag und Bekanntmachung des Hinweises auf die Patenterteilung: **27.06.2012**
(21) Anmeldenummer: 04701594.6
(22) Anmeldetag: 13.01.2004
(51) Int. Cl.: B01D 53/04, B01D 19/00, B01L 3/00

(54) **PROBENKAMMER FÜR EINE FLÜSSIGKEIT**
SAMPLE CHAMBER FOR A LIQUID
CHAMBRE A ECHANTILLON POUR UN LIQUIDE

(30) Priorität: 13.01.2003 DE 10300957
(43) Veröffentlichungstag der Anmeldung: 23.11.2005
(73) Patentinhaber: ibidi GmbH, 82152 Martinsried (DE)
(72) Erfinder: KAHL, Johan-Valentin, 80636 München (DE); ZANTL, Roman, 85598 Baldham (DE)
(74) Vertreter: Grünecker, Kinkeldey, Stockmair & Schwanhäusser
(86) Internationale Anmeldenummer: PCT/EP2004/000167
(87) Internationale Veröffentlichungsnummer: WO 2004/062773

(56) Entgegenhaltungen:
- EP-A- 0 488 665
- EP-A2- 0 787 821
- US-A- 3 751 879
- US-A- 5 922 604
- US-A1- 2002 016 007

## Beschreibung

Die Erfindung betrifft eine Probenkammer und ein Verfahren zum Zu- und/oder Abführen eines Fluids und/oder von Feststoffen an und/oder aus einer Flüssigkeit.

Biologische und chemische Reaktionen an Molekülen (z.B. DNA oder Proteine) und an Zellen zur Analytik oder Diagnostik werden meistens in (stehenden oder fließenden) Flüssigkeiten durchgeführt. Unter atmosphärischen Bedingungen enthalten Flüssigkeiten im Allgemeinen gelöste Gase (z.B. O₂, N₂, CO₂). Aus diesem Grund bilden sich in stehenden Flüssigkeiten sogenannte Gasblasen aus. Diese Gasblasen erschweren die Untersuchungen und verfälschen unter Umständen die entsprechenden Ergebnisse. Falls insbesondere eine bestimmte Reaktion an einer Trägerwand nachgewiesen werden soll, kann eine solche Reaktion auf Grund von Gasblasen erschwert sein. Somit müssen bei der Verwendung von gasundurchlässigen Probenträgern die Flüssigkeiten entgast werden, um das Auftreten von Gasblasen zu verhindern.

Insbesondere in Mikrofluidsystemen, die Kanäle in einem Träger umfassen, können Gasblasen außerdem zu Verstopfungen oder zu Veränderungen der Fluidik führen.

Besteht andererseits eine Probenkammer oder ein Probenträger aus einem Material, das Gase aufnehmen kann, können aus der Umgebung absorbierte Gase, beispielsweise Luft, während einer Untersuchung unkontrolliert in die Flüssigkeit diffundieren. Auch dies führt zur Gasblasenentwicklung in bereits entgasten Flüssigkeiten. Dieses Problem tritt insbesondere bei Temperaturänderungen der Flüssigkeiten oder Probenkammern auf. Bei einer Temperaturerhöhung verringert sich die Gaslöslichkeit in Festkörpern und vor allem in Flüssigkeiten. Da eine hundertprozentige Entgasung kaum möglich ist, tritt somit Blasenbildung bei einer Temperaturerhöhung mit hoher Wahrscheinlichkeit auch bei bereits einmal "entgasten" Flüssigkeiten auf.

Wird beispielsweise in einer Probenkammer aus Kunststoff mit einer hohen Gaskapazität eine PCR (polymerase Kettenreaktion) mit Temperaturzyklen von 90°C durchgeführt, können bei konventionellen Verfahren eventuell vorhandene Gase aus einem nicht entgasten Kunststoff unkontrolliert in die Probenkammer gelangen.

Es ist daher die Aufgabe der folgenden Erfindung; eine Probenkammer bereitzustellen, die es ermöglicht, Fluide (Gase oder Flüssigkeiten) und/oder Feststoffe kontrolliert an eine Flüssigkeit abzugeben und/oder aus einer Flüssigkeit aufzunehmen.

Diese Aufgabe wird gelöst durch eine Probenkammer gemäß Anspruch 1.

Erfindungsgemäß wird eine Probenkammer für eine Flüssigkeit bereitgestellt, wobei wenigstens ein Teil im Inneren der Probenkammer einen fluidabsorbierenden und/oder fluidpermeablen Kunststoff umfasst, der in wenigstens einem Bereich im Wesentlichen entgast ist und/oder in dem in wenigstens einem Bereich ein vorbestimmtes Fluid und/oder vorbestimmter Feststoff löslich gespeichert ist.

Die erfindungsgemäße Probenkammer erlaubt einerseits ein Entgasen einer Flüssigkeit in der Probenkammer, falls die Probenkammer einen gaspermeablen und/oder gasabsorbierenden Bereich aufweist, der entgast ist und somit Gase aus der Flüssigkeit aufnehmen kann. Andererseits können vorbestimmte Fluide, die zuvor in einem Bereich der Probenkammer löslich gespeichert worden sind, an die in der Probenkammer befindliche Flüssigkeit abgegeben werden. Die erfindungsgemäße Probenkammer kann insbesondere einmalig oder mehrfach gerade außerhalb von Laboratorien verwendet werden, z. B. zum Entgasen von Seewasserproben.

Gemäß einer vorteilhaften Weiterbildung kann wenigstens ein weiterer Teil im Inneren der Probenkammer einen weiteren fluidabsorbierenden und/oder fluidpermeablen Kunststoff umfassen, der in wenigstens einem Bereich im Wesentlichen entgast ist und/oder in dem in wenigstens einem Bereich ein vorbestimmtes Fluid und/oder vorbestimmter Feststoff löslich gespeichert ist.

Auf diese Weise können insbesondere in verschiedenen Bereichen einer Probenkammer unterschiedliche Fluide und/oder Feststoffe an die Flüssigkeit abgegeben werden und/oder von der Flüssigkeit aufgenommen werden.

Vorzugsweise kann der weitere Kunststoff einen Absorptionskoeffizienten und/oder eine Diffusionskonstante aufweisen, die von dem/der des einen fluidabsorbierenden und/oder fluidpermeablen Kunststoffs verschieden ist. Damit können in kontrollierter Weise unterschiedliche Mengen pro Zeiteinheit eines Fluids und/oder von Feststoffen an eine Flüssigkeit abgegeben oder aus einer Flüssigkeit aufgenommen werden.

Gemäß einer vorteilhaften Weiterbildung aller zuvor beschriebenen Probenkammern kann eine vorbestimmte Menge des Fluids und/oder Feststoffs löslich gespeichert sein. Dies ermöglicht insbesondere ein genaues Einstellen der abzugebenden Fluid- und/oder Feststoffmenge. Insbesondere kann die Menge so gewählt sein, dass der Kunststoff mit dem Fluid und/oder Feststoff gesättigt ist. Im allgemeinen ist der Stofftransport proportional zur Oberfläche des absorbierenden oder permeablem Bereichs. Damit kann also bei stehenden Flüssigkeiten eine mit der Zeit ansteigende Konzentration bzw. bei durchfließenden Flüssigkeiten eine zeitabhängige Verringerung der Abgabemenge erreicht werden.

Gemäß einer vorteilhaften Weiterbildung der zuvor beschriebenen Probenkammern können in wenigstens zwei Bereichen Fluide und/oder Feststoffe in unterschiedlichen Mengen und/oder Konzentrationen gespeichert sein. Auf diese Weise kann innerhalb der Probenkammer ein Konzentrationsgradient erzeugt werden.

In einer weiteren vorteilhaften Weiterbildung der zuvor beschriebenen Probenkammern kann an wenigstens einem Teil der Oberfläche eines fluidabsorbierenden und/oder fluidpermeablen Kunststoffs ein semipermeables oder im Wesentlichen impermeables Material, insbesondere lösbar, angeordnet sein.

Das Material kann gas- , flüssigkeits- und/oder feststoffundurchlässig sein. Ein solches semipermeables oder impermeables Material verhindert ein Diffundieren eines Fluids in den oder aus dem Kunststoff. Ein semipermeables Material erlaubt das Diffundieren nur von bestimmten Fluiden oder Feststoffen. Durch Lösen des semipermeablen oder impermeablen Materials von dem permeablen Kunststoff kann die Oberfläche des permeablen Kunststoffs zur Diffusion freigegeben werden. Ein fluidimpermeables Material kann beispielsweise eine Kunststofffolie sein, die lösbar auf einen Bereich der Probenkammer geklebt ist.

Gemäß einer vorteilhaften Weiterbildung aller zuvor beschriebenen Probenkammern kann die Probenkammer Teil eines Probenträgers sein. In diesem Fall kann die Zu- und/oder Abführung eines Fluids oder eines Feststoffs insbesondere während einer Untersuchung erfolgen.

Vorzugsweise kann der Probenträger ein Substrat umfassen, in dem die Probenkammer als Kanal ausgebildet ist. Die Probenkammer kann somit insbesondere Teil eines Mikrofluidsystems sein. Während eine Probenflüssigkeit einen solchen Kanal durchfließt oder in einem solchen Kanal aufgenommen ist, kann die Zu- und/oder Abführung von Fluiden und/oder Feststoffen erfolgen.

Vorteilhafterweise kann der Kanal ein Verhältnis von Querschnittsumfang zu Querschnittsfläche von etwa 10 -1000, vorzugsweise von 20 - 250, am meisten bevorzugt von 50 -100 aufweisen. Damit wird Oberfläche des Kanals und damit die Grenzfläche zwischen Flüssigkeit und Substrat erhöht, was die Zu- und/oder Abführung von Fluiden und/oder Feststoffen verbessert. Zur Erhöhung des Verhältnisses von Querschnittsumfang zu Querschnittsfläche kann das Substrat ein poröses Material oder Nanoröhren umfassen.

Dies kann beispielsweise durch ein Aspektverhältnis von kleiner als 0,1, vorzugsweise kleiner als 0,01, am meisten bevorzugt kleiner als 0,001 erreicht werden. Unter dem Aspektverhältnis wird das Verhältnis der lateralen zu der vertikalen Dimension des Kanalquerschnitts verstanden; bei rechteckigen Kanalquerschnitten beispielsweise ist dies also das Verhältnis von Höhe zu Breite und bei ellipsenförmigen Kanalquerschnitten das Verhältnis der Hauptachsen.

Gemäß einer bevorzugten Weiterbildung die zuvor genannten Substrate eine Gasdiffusionskonstante in einem Bereich von etwa 10⁻⁵ cm²/sec bis etwa 10⁻⁹ cm²/sec, vorzugsweise von 10⁻⁷ cm²/sec bis etwa 10⁻⁹ cm²/sec, aufweisen. Bei einer solchen Gasdiffusionskonstante wird eine Zu- und/oder Abführung von Gasen an und/oder aus der Flüssigkeit in dem Kanal begünstigt. Gleichzeitig wird beispielsweise bei einem entgasten Substrat vermieden, dass bei einem Aussetzen des Substrats an Luft diese zu schnell in das Substrat diffundiert. Eine geeignete Gasdiffusionskonstante kann beispielsweise durch eine Oberflächenbehandlung des Kanals in dem Substrat erzielt werden, um die interne Vernetzung des Substratpolymers entsprechend zu verändern.

Das Substrat kann vorteilhafterweise eine Wasseraufnahme in einem Bereich von etwa 0,001% bis etwa 0,5 %, vorzugsweise in einem Bereich von etwa 0,001 % bis etwa 0,01 %, aufweisen. Damit wird erreicht, dass bei möglichst geringer Flüssigkeitsaufnahme des Substrats ein hoher Gasaustausch (beispielsweise durch Gasaufnahme des Substrats aus der Flüssigkeit) zustande kommt.

Gemäß einer vorteilhaften Weiterbildung kann das Substrat ein Gasaufnahmepotential von kleiner als etwa 1 wt% (Gewichtsprozent), vorzugsweise zwischen etwa 0,005 und 0,1 wt%, aufweisen.

Gemäß einer vorteilhaften Weiterbildung kann der Probenträger wenigstens ein Flüssigkeitsreservoir umfassen und der Kanal mit dem wenigstens einen Flüssigkeitsreservoir verbunden sein. Die Flüssigkeit kann in dem Flüssigkeitsreservoir enthalten sein und dann in oder durch den Kanal geleitet werden, wo eine Untersuchung oder chemische Reaktion stattfindet.

Vorzugsweise ist das wenigstens eine Flüssigkeitsreservoir auf dem Substrat des Probenträgers angeordnet. Auf diese Weise kann das Substrat mit dem Kanal dünn gehalten werden, was insbesondere für Mikroskopieuntersuchungen der Flüssigkeit in dem Kanal vorteilhaft ist.

In einer vorteilhaften Weiterbildung kann der Kanal in die dem wenigstens einen Flüssigkeitsreservoir gegenüberliegende Oberfläche des Substrats eingebacht sein. Ein solcher Probenträger kann daher insbesondere für die inverse Mikroskopie verwendet werden. Da das wenigstens eine Flüssigkeitsreservoir auf der anderen Oberfläche des Substrats angeordnet ist, behindert es auch nicht die Untersuchung.

In einer vorteilhaften Weiterbildung der zuvor beschriebenen Probenkammern kann das Substrat und das wenigstens eine Flüssigkeitsreservoir als ein Stück ausgebildet sein. Dies vereinfacht zum einen die Herstellung des Probenträgers, da das Substrat und die Flüssigkeitsreservoire nicht mehr aufwändig zusammengefügt werden müssen. Außerdem wird auf diese Weise die Verwendung von Dichtungsmaterialien zwischen den Flüssigkeitsreservoiren und dem Substrat vermieden. Hinzu kommt, dass bei einer einstückigen Ausführung die Sterilisierung des Probenträgers vereinfacht wird.

Vorteilhafterweise können alle zuvor beschriebenen Probenträger aus Kunststoff bestehen. Dies vereinfacht die Verarbeitung und reduziert die Kosten bei der Herstellung. Insbesondere kann der gesamte Probenträger aus einem fluidabsorbierenden und/oder fluidpermeablen Kunststoff bestehen.

Gemäß einer vorteilhaften Weiterbildung aller zuvor beschriebenen Probenkammern kann der Probenträger integrierte galvanische Elemente, beispielsweise Zn/Cu, umfassen. Sind diese durch eine Elektrolytlösung (z. B. H₂SO₄) verbunden, entsteht eine elektrische Spannung. Werden die galvanischen Elemente dann mit einer weiteren leitenden Flüssigkeit in Kontakt gebracht (z.B. durch eine Befüllung der Probenkammer mit Ringerlösung), die nicht mit der Elektrolytlösung in Kontakt steht, wird der Stromkreis geschlossen. In dieser Lösung besteht somit zwischen den galvanischen Elementen ebenfalls eine Spannung. Diese kann beispielsweise zur elektrophoretischen Trennung verwendet werden.

Grundsätzlich können die galvanischen Elemente einfach in ein wässriges Medium getaucht werden, so dass eine geringe Spannungsdifferenz entsteht. Vorzugsweise können die galvanischen Elemente an den Enden eines Kanals in den Probenträger integriert und leitend miteinander verbunden sein. Bei Befüllung des Kanals würde sich dann der Stromkreis schließen und die galvanischen Elemente aktiviert werden.

Die Erfindung stellt außerdem ein Verfahren zum Behandeln einer Probenkammer für eine Zu- und/oder Abführung eines Fluids und/oder von Feststoffen an eine Flüssigkeit mit den folgenden Schritten bereit:
Bereitstellen einer Probenkammer für eine Flüssigkeit, insbesondere wie zuvor beschrieben, wobei wenigstens ein Teil im Inneren der Probenkammer einen fluidabsorbierenden und/oder fluidpermeablen Kunststoff umfasst,
Entgasen wenigstens eines Bereichs des fluidabsorbierenden und/oder fluidpermeablen Kunststoffs und/oder lösliches Speichern eines vorbestimmten Fluids und/oder vorbestimmten Feststoffs in wenigstens einem Bereich des fluidabsorbierenden und/oder fluidpermeablen Kunststoffs.

Gemäß einer vorteilhaften Weiterbildung kann der Schritt des Entgasens und/oder Speichern ein Einbringen der Probenkammer in eine vorbestimmte Fluidumgebung umfassen.

Auf Grund der vorbestimmten Fluidumgebung können ein vorbestimmtes Fluid und/oder Feststoffe in den Kunststoff eindringen und dort gespeichert werden. Alternativ können in einer bestimmten Fluidumgebung auch ein Fluid und/oder Feststoffe aus dem Kunststoff heraus diffundieren. Die vorbestimmte Fluidumgebung kann durch Parameter wie Art des Fluids, Druck, Fläche und/oder Temperatur charakterisiert sein.

Vorzugsweise kann die vorbestimmte Fluidumgebung einen Unterdruck oder einen Überdruck aufweisen. Dies beschleunigt das Ein- oder Ausdiffundieren des Fluids.

In einer vorteilhaften Weiterbildung kann das Fluid eine Flüssigkeit sein, in der Feststoffe gelöst sind, und der Schritt des Speicherns weiterhin ein Entziehen der Flüssigkeit umfassen. Damit können Feststoffe in dem Kunststoff gespeichert werden. Die Feststoffe sind in der Flüssigkeit gelöst, die in den Kunststoff diffundiert. Nach dem Entziehen der Flüssigkeit verbleiben die Feststoffe in dem Kunststoff und können später mittels einer Flüssigkeit aus dem Kunststoff gelöst werden.

Gemäß einer vorteilhaften Weiterbildung der zuvor beschriebenen Verfahren kann das Einbringen in eine vorbestimmte Fluidumgebung für einen vorbestimmten Zeitraum erfolgen. Durch einen geeignet gewählten Zeitraum kann die Menge des in dem Kunststoff gespeicherten Fluids und/oder Feststoffes bzw. die Menge des entzogenen Fluids und/oder Feststoffes eingestellt werden.

Vorzugsweise können die beschriebenen Verfahren den weiteren Schritt eines, insbesondere lösbaren, Anordnens eines semipermeablen oder im Wesentlichen impermeäblen Materials an wenigstens einem Teil der Oberfläche des fluidabsorbierenden und/oder fluidpermeablen Kunststoffs umfassen. Mit einem solchen Material kann verhindert werden, dass in den oder aus dem Kunststoff weiterhin ein Fluid und/oder Feststoffe diffundieren. Als fluidimpermeables Material kann beispielsweise eine Kunststofffolie verwendet werden. Nach Lösen des Materials ist die Diffusion wieder ermöglicht. Das Material kann beispielsweise nach der Herstellung der Probenkammer angeordnet und vor der Verwendung der Probenkammer entfernt werden, so dass die Diffusion erst kurz vor oder während der Verwendung (z.B. einer Untersuchung von biologischen Reaktionen in Flüssigkeit) beginnt.

Vorteilhafterweise können die zuvor beschriebenen Verfahren den weiteren Schritt eines fluiddichten, insbesondere gasdichten, Verpackens der Probenkammer umfassen. Insbesondere nachdem ein vorbestimmtes Fluid und/oder Feststoff in den Kunststoff eingebracht oder dem Kunststoff entzogen worden ist, erlaubt ein solches Verpacken der Probenkammer ein Beibehalten dieses Zustands. Erst nachdem die Probenkammer ausgepackt worden ist, diffundiert das Fluid und/oder der Feststoff aus dem oder in den Kunststoff.

Vorzugsweise kann das fluiddichte Verpacken unter einer vorbestimmten Fluidatmosphäre erfolgen. Diese Fluidatmosphäre wird vorteilhafterweise so gewählt, dass bis zur Verwendung des Probenträgers eine gewünschte Menge an Fluid und/oder Feststoffen in dem Kunststoff verbleiben. Alternativ kann auch ein Vakuumverpacken unter Vakuumatmosphäre erfolgen.

Die Erfindung betrifft außerdem die Verwendung eines fluidabsorbierenden und/oder fluidpermeablen Kunststoffs zum Zu- und/oder Abführen eines Fluids und/oder von Feststoffen an bzw. aus einer Flüssigkeit.

Vorzugsweise kann ein Kunststoff in Kolloidform verwendet werden. Solche Kolloide können beispielsweise in eine Probenkammer für eine Flüssigkeit eingebracht werden. Gemäß einer vorteilhaften Alternative kann der Kunststoff Teil einer der oben beschriebenen Probenkammern sein.

Weitere Merkmale und Vorteile der Erfindung werden an Hand der folgenden Zeichnungen beschrieben. Dabei zeigt
- Figur 1: eine Querschnittsansicht eines Beispiels einer erfindungsgemäßen Probenkammer;
- Figur 2: eine Querschnittsansicht eines Beispiels einer erfindungsgemäßen Probenkammer, die Teil eines Probenträgers ist; und
- Figur 3: eine Querschnittsansicht eines weiteren Beispiels einer erfindungsgemäßen Probenkammer, die Teil eines Probenträgers ist.

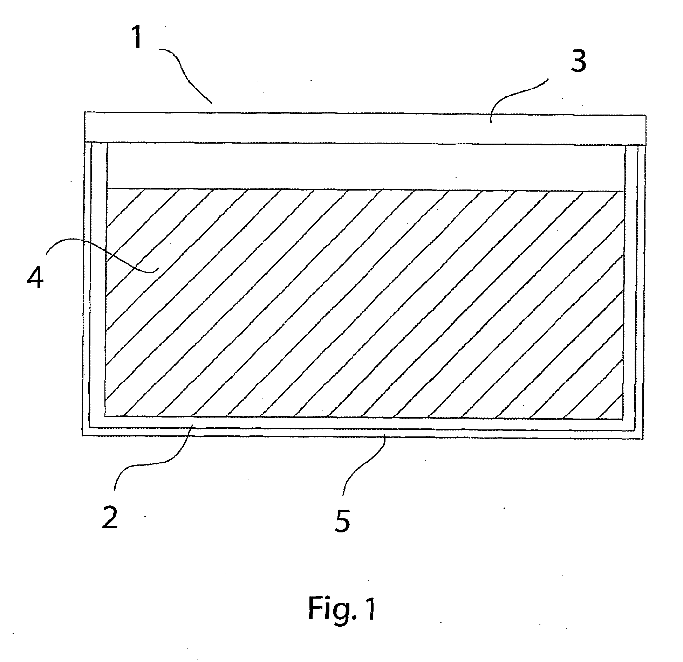

In Figur 1 ist ein Beispiel einer erfindungsgemäßen Probenkammer 1 gezeigt. Die Probenkammer 1 wird durch Kunststoffwände 2 gebildet und umfasst einen Deckel 3. Die gesamte Kunststoffwand 2 ist in diesem Beispiel gasabsorbierend und wurde vor der Verwendung in einer Vakuumkammer entgast. In der Probenkammer befindet sich eine Flüssigkeit 4, beispielsweise mit zu untersuchenden Molekülen oder Zellen. Auf Grund der entgasten Kunststoffwände 2 kann in der Flüssigkeit 4 befindliches Gas von den Kunststoffwänden absorbiert werden. Um zu verhindern, dass vor oder während einer Verwendung der Probenkammer an Luft diese von außen in die gasabsorbierenden Kunststoffwände diffundiert, ist außen an der Probenkammer ein gasimpermeables Material 5, vorzugsweise eine luftdichte Kunststofffolie, angeordnet. Diese Kunststofffolie kann fest oder auch lösbar mit den Kunststoffwänden 2 verbunden sein.

Wenn statt der Entgasung der Flüssigkeit 4 die Flüssigkeit mit Gas beladen werden soll, kann die Probenkammer vor der Verwendung, d.h. vor einer Befüllung mit Flüssigkeit, in eine entsprechende Gasatmosphäre, vorzugsweise mit Überdruck, eingebracht werden, so dass das entsprechende Gas von den Kunststoffwänden 2 absorbiert wird und bei der Verwendung der Probenkammer an die Flüssigkeit 4 abgegeben werden kann.

Bei Verwendung von gaspermeablen Kunststoffwänden 2 mit einer vorbestimmten Diffusionskonstanten kann die Kunststofffolie 5 alternativ zu einem bestimmten Zeitpunkt von den Kunststoffwänden 2 entfernt werden und die Probenkammer 1 in eine vorbestimmte Gasatmosphäre gebracht werden, so dass Gas von außen durch die Kunststoffwände 2 kontrolliert in die Flüssigkeit diffundieren kann.

In allen beschriebenen Fällen kann zwischen der Flüssigkeit 4 und dem Deckel 3 ein Vakuum oder auch eine bestimmte Gasatmosphäre vorgesehen sein.

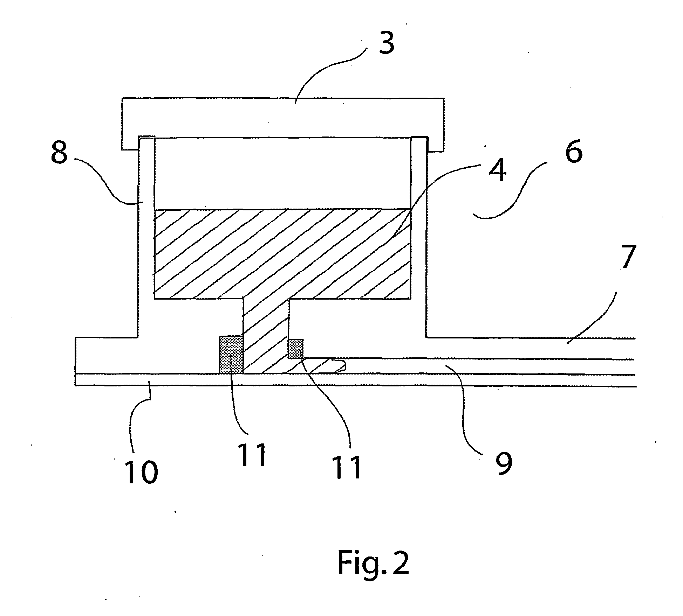

In Figur 2 ist ein Probenträger 6 in Querschnittsansicht gezeigt, der ein Substrat 7 umfasst, auf dem ein Flüssigkeitsreservoir 8 angeordnet ist. Die Probenkammer ist als Kanal 9 in der Unterseite des Substrats 7 eingebracht. In diesem Ausführungsbeispiel ist der Probenträger mit Substrat 7 und Flüssigkeitsreservoir 8 als ein Stück ausgebildet. Dabei ist der Kanal 9 nach unten offen und wird durch eine Schicht 10 verschlossen. Die Schicht 10 kann beispielsweise eine Kunststofffolie sein, die auf das Substrat aufgeklebt wird. Der gezeigte Probenträger 6 kann in vorteilhafter Weise für Verfahren der inversen Mikroskopie verwendet werden.

Das Flüssigkeitsreservoir 8 ist teilweise mit Flüssigkeit 4 gefüllt und durch einen Deckel 3 luftdicht verschlossen. Zwischen Deckel und Flüssigkeit herrscht ein Unterdruck, so dass die Flüssigkeit nur bis zu einem gewissen Punkt in den Kanal 9 reicht. Am Anfang des Kanals 9 sind angrenzend an den Kanal Feststoffe 11 in dem Probenträger gespeichert.

Diese Feststoffe waren zuvor in den Probenträgern eingebracht worden, indem in diesen Bereich des Kanals eine Flüssigkeit in den Kanal 9 gegeben wurde, in der die entsprechenden Feststoffe gelöst waren. Bei Verwendung eines fluidpermeablen Kunststoffs für den Probenträger 6 kann diese Flüssigkeit mit den gelösten Feststoffen in den Kunststoff eindringen. Anschließend wurde die Flüssigkeit eingetrocknet, so dass die Feststoffe in den Bereichen 11 des Probenträgers verblieben.

Kommt nun eine Probenflüssigkeit 4 mit den Bereichen 11 in Berührung, dringt die Flüssigkeit auch in den Bereichen 11 in den Probenträger ein und löst die Feststoffe, die somit von der Flüssigkeit 4 aufgenommen werden. Auf Grund des Unterdrucks zwischen Deckel und Flüssigkeit und ggf. einer hydrophoben Beschichtung des Kanals 9 fließt die Flüssigkeit nicht weiter in den Kanal. Nach einer bestimmten Zeit, sobald beispielsweise ausreichend Feststoffe in der Probenflüssigkeit 4 gelöst sind, kann beispielsweise der Deckel 3 entfernt oder durchstochen werden, so dass kein Unterdruck mehr besteht. Alternativ kann die Flüssigkeit 4 auch mit Überdruck beaufschlagt werden. In beiden Fällen wird somit ermöglicht, dass die Flüssigkeit 4 weiter in den Kanal 9 fließt, in dem dann Untersuchungen durchgeführt werden können.

Der Probenträger 6 kann mehrere solcher Kanäle umfassen, die sich beispielsweise kreuzen oder in ein gemeinsames Reservoir münden. Mit dem beschriebenen Verfahren kann durch gezielte Anwendung von Unter- und Überdruck bzw. Durchstoßen oder Öffnen von Deckeln ein kontrolliertes Durchfließen des Kanalsystems bzw. Zusammenführen mehrerer Flüssigkeiten erreicht werden.

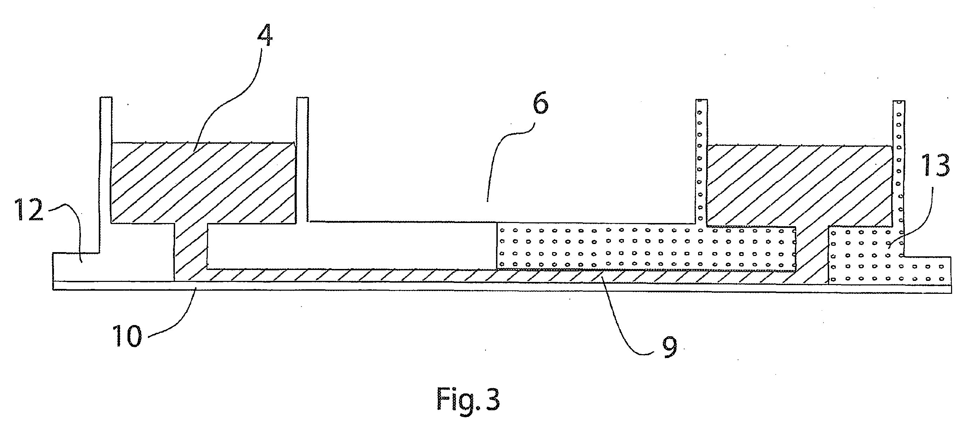

Figur 3 zeigt ein weiteres Ausführungsbeispiel eines Probenträgers 6 in Querschnittsansicht, wobei die Probenkammer wiederum als Kanal 9 ausgebildet ist, der durch eine Folie 10 verschlossen ist. In diesem Beispiel besteht der Probenträger 6 aus zwei Materialien 12 und 13, die gaspermeabel sind aber unterschiedliche Absorptionskoeffizienten aufweisen, wie durch die unterschiedliche Kennzeichnung angedeutet wird. Dies bedeutet, dass unterschiedliche Mengen bzw. Konzentrationen eines Gases in den beiden Materialen gespeichert werden können. Auf diese Weise kann ein Konzentrationsgradient entlang des Kanals 9 erzeugt werden.

Beispielsweise kann die Probenkammer zuvor in einer CO₂-Atmosphäre mit CO₂ "beladen" worden sein, welches dann kontinuierlich an die Probenflüssigkeit abgegeben werden kann, selbst wenn sich die Probenkammer später in einer anderen Umgebungsatmosphäre befindet. Durch Wahl eines Kunststoffes mit einer hohen Gaskapazität und einer geringen Diffusionskonstante können Speicherzeiten bis zu einer Woche realisiert werden. Dies kann insbesondere dazu verwendet werden, Zellen über eine lange Zeit zu analysieren. Viele Zellen benötigen eine konstante Versorgung mit CO₂; die CO₂-Versorgung dient unter Anderem dem Aufrechterhalten des pH-Wertes in der Flüssigkeit. In diesem Fall werden vorzugsweise Kunststoffe verwendet, die nur gaspermeabel nicht jedoch flüssigpermeabel sind.

Werden die in Figur 3 gezeigten Materialien 12 und 13 als CO₂ Speicher mit unterschiedlichen Speicherkapazitäten verwendet, kann ein CO₂-, d.h. ein pH-Gradient in dem Kanal ausgebildet werden. In diesem Fall wird im allgemeinen ein sehr geringer pH-Gradient erzeugt; in einem anderen Beispiel kann HCl verwendet werden. Die erzeugten Gradienten können insbesondere bei der Analyse von Chemotaxisexperimenten (Bewegung von Organismen in einem Gradientenfeld) oder zur isoelektrischen Fokussierung eingesetzt werden.

Alternativ kann auch das gesamte Substrat aus einem Kunststoff bestehen, der eine Gasdiffusionskonstante in einem Bereich von etwa 10⁻⁵ cm²/sec bis etwa 10⁻⁹ cm²/sec und eine Wasseraufnahme in einem Bereich von 0,5 % bis 0,001 % aufweist. Damit wird einerseits vermieden, dass der Kunststoff aufgrund der Flüssigkeit aufquillt, andererseits eine geeignete Gasaufnahme oder -abgabe durch den Kunststoff ermöglicht.

Durch eine Oberflächenbehandlung, die zu größeren internen Vernetzungen des Polymers führen (bspw. Plasmabehandlung) oder durch Beschichtung von Oberflächen mit stark vernetzten Polymeren kann die Diffusion in diesen Schichten stark reduziert werden. Um einen optimalen Gasaustausch zwischen Flüssigkeit und Festkörper zu ermöglichen, können beispielsweise entsprechende diffusionshemmende Schichten besonders dünn sein; alternativ oder zusätzlich kann die Kanaloberfläche in verschiedenen Bereichen unterschiedlich behandelt oder beschichtet sein.

Bei einem kleinen Aspektverhältnis wird der Gasaustausch aufgrund der großen Grenzfläche zwischen Flüssigkeit und Kanaloberfläche in bevorzugter Weise beschleunigt. Weiterhin kann für hohe Strömungsgeschwindigkeiten die Oberfläche pro Volumen bzw. der Querschnittsumfang pro Querschnittsfläche weiter erhöht werden, beispielsweise durch Verwendung von porösen Materialien oder Nanoröhren.

Die Fluidspeicherzeiten in dem Kunststoff können durch eine Optimierung des Kunststoffvolumens, des Aufnahmevolumens und/oder einer Optimierung der Aufnahmeoberfläche erhöht werden. Vorzugsweise können auch bei dem in Figur 3 gezeigten Ausführungsbeispiel die nach außen zeigenden Oberflächen mit gasundurchlässigen Folien versiegelt sein.

In einer alternativen Anwendung können eines oder beide Materialien 12 und 13 entgast sein, um die Gasblasenentwicklung in dem Kanal zu verhindern.

Insbesondere im Zusammenhang mit Beispiel von Figur 3 ist zu erwähnen, dass ein Entgasen und/oder Begasen von Kunststoffen auch speziell dazu verwendet werden kann, ein Verbinden von Kunststoffsubstraten zu beschleunigen. Dabei kann die Verbindung unter Verwendung von Klebern oder Lösungsmitteln oder durch eine chemische oder physikalische Aktivierung der zu verbindenden Oberflächen durchgeführt werden. Das Vorhandensein oder Nichtvorhandensein von bestimmten Gasen in einem Kunststoff hat einen Einfluss auf die Reaktionsgeschwindigkeit beim Verbindungsprozess.

Das Löslichkeitsprodukt von Gasen in Flüssigkeiten ist sehr temperaturabhängig. Gasblasen bilden sich bei nicht entgasten aber auch bei bereits entgasten Flüssigkeiten in einer Probenkammer insbesondere dann, wenn die Temperatur der Flüssigkeit erhöht wird. Die entstehenden Gasblasen können dann von dem umgebenden entgasten Kunststoff aufgenommen werden.

Bei der Verwendung von entgasten Kunststoffen wird die Probenkammer vorzugsweise vakuumverpackt. Je nach Verhältnis der Gaskapazität und der Diffusionskonstante für Gase in dem Kunststoff kann ein solcher Analyseträger Stunden bis Tage nach Öffnen der Vakuumpackung verwendet werden.

Eine Entgasung einer Probenflüssigkeit über einen gaspermeablen Kunststoff kann insbesondere beschleunigt werden, wenn die Flüssigkeit aus einem Hauptkanal in mehrere Seitenkanäle mit geringerem Durchmesser geleitet wird, so dass die Berührungsfläche zwischen Flüssigkeit und Kunststoff erhöht wird.

Geeignete fluidabsorbierende und/oder fluidpermeable Materialien sind insbesondere Polykarbonat, COC und COP (insbesondere als Gasspeicher geeignet), PMMA (insbesondere als Flüssigkeitsspeicher geeignet). Alternativ kann auch Polystirol, PE, PVC oder PP verwendet werden.

Alternativ zu der Verwendung eines absorbierenden Kunststoffes als Teil der Probenkammer kann eine Gasblasenbildung in einer Probenkammer kontrolliert werden, indem Kolloide mit einer definierten Gaskapazität und Gaspermeabilität verwendet werden. Diese können direkt in die Probenkammer eingebracht werden. Durch geeignete Wahl des Oberflächen-/Volumenverhältnisses der Kolloide können die zeitliche Gasabgabe oder Aufnahmezyklen eingestellt werden.

Es versteht sich, dass die in den Ausführungsbeispielen beschriebenen Merkmale keine Einschränkungen darstellen sollen und auch in anderen Kombinationen als beschrieben verwirklicht werden können.

## Patentansprüche

1. Probenträger mit einer Probenkammer (1, 6) für eine Flüssigkeit (4), wobei wenigstens ein Teil im Inneren der Probenkammer einen gasabsorbierenden und/oder gaspermeablen Kunststoff (2, 12, 13) umfasst,
**dadurch gekennzeichnet, dass**
der gasabsorbierende und/oder gaspermeable Kunststoff in wenigstens einem Bereich im Wesentlichen entgast ist,
der Probenträger ein Substrat (7) umfasst, in dem die Probenkammer als Kanal (9) ausgebildet ist und
der Probenträger vakuumverpackt ist.

2. Probenträger nach Anspruch 1, wobei an wenigstens einem Teil der Oberfläche eines gasabsorbierenden und/oder gaspermeablen Kunststoffs ein semipermeables oder im Wesentlichen impermeables Material (5), insbesondere lösbar, angeordnet ist.

3. Probenträger nach einem der Ansprüche 1 oder 2, wobei der Probenträger aus Kunststoff ist.

4. Probenträger nach einem der vorangegangenen Ansprüche, wobei der Kanal ein Verhältnis von Querschnittsumfang zu Querschnittsfläche von etwa 10 - 1000, vorzugsweise von 20 - 250, am meisten bevorzugt von 50 -100 aufweist.

5. Probenträger nach einem der vorangegangenen Ansprüche, wobei das Substrat eine Gasdiffusionskonstante in einem Bereich von etwa 10⁻⁵ cm²/sec bis etwa 10⁻⁹ cm²/sec, vorzugsweise von 10⁻⁷ cm²/sec bis etwa 10⁻⁹ cm²/sec, aufweist.

6. Probenträger nach einem der vorangegangenen Ansprüche, wobei der Probenträger wenigstens ein Flüssigkeitsreservoir (8) umfasst und der Kanal mit dem wenigstens einen Flüssigkeitsreservoir verbunden ist, insbesondere wobei das wenigstens eine Flüssigkeitsreservoir auf dem Substrat des Probenträgers angeordnet ist.

7. Probenträger nach einem der vorangegangenen Ansprüche, wobei das Substrat und das wenigstens eine Flüssigkeitsreservoir als ein Stück ausgebildet sind.

8. Verfahren zum Behandeln einer Probenkammer für ein Aufnehmen eines Gases aus einer Flüssigkeit mit den Schritten:
Bereitstellen eines Probenträgers mit einer Probenkammer (1b) für eine Flüssigkeit (4), insbesondere nach einem der vorangegangenen Ansprüche, wobei wenigstens ein Teil im Inneren der Probenkammer einen gasabsorbierenden und/oder gaspermeablen Kunststoff (2, 12, 13) umfasst,
**gekennzeichnet durch**
Entgasen wenigstens eines Bereichs des gasabsorbierenden und/oder gaspermeablen Kunststoffs in wenigstens einem Bereich des gasabsorbierenden und/oder gaspermeablen Kunststoffs,
Vakuumverpacken der Probenkammer unter Vakuumatmospäre,
wobei der Probenträger ein Substrat (7) umfasst, in dem die Probenkammer als Kanal (9) ausgebildet ist.

9. Verfahren nach Anspruch 8, wobei der Schritt des Entgasens ein Einbringen der Probenkammer in eine vorbestimmte Gasumgebung, insbesondere mit einem Unterdruck oder einem Überdruck, umfasst, insbesondere wobei das Einbringen in eine vorbestimmte Gasumgebung für einen vorbestimmten Zeitraum erfolgt.

10. Verfahren nach einem der Ansprüche 8 oder 9 mit dem weiteren Schritt eines, insbesondere lösbaren, Anordnens eines semipermeablen oder im Wesentlichen impermeablen Materials (5) an wenigstens einem Teil der Oberfläche des gasabsorbierenden und/oder gaspermeablen Kunststoffs.

11. Verfahren nach einem der Ansprüche 8 - 10 mit dem weiteren Schritt eines gasdichten, Verpackens der Probenkammer, insbesondere unter einer vorbestimmten Gasatmosphäre.

## Claims

1. Sample carrier having a sample chamber (1, 6) for a liquid (4), wherein at least one part inside the sample chamber comprises a gas-absorbing and/or gas-permeable plastics material (2, 12, 13),
**characterised in that**
the gas-absorbing and/or gas-permeable plastics material is substantially degassed in at least one region,
the sample carrier comprises a substrate (7) in which the sample chamber is configured as a channel (9), and
the sample carrier is vacuum-packed.

2. Sample carrier according to claim 1, wherein a semi-permeable or substantially impermeable material (5) is arranged, particularly in a detachable manner, on at least one part of the surface of a gas-absorbing and/or gas-permeable plastics material.

3. Sample carrier according to either claim 1 or claim 2, wherein the sample carrier is made of plastics material.

4. Sample carrier according to any one of the preceding claims, wherein the channel has a ratio of cross-sectional periphery to cross-sectional area from approximately 10-1000, preferably from 20-250, most preferably from 50-100.

5. Sample carrier according to any one of the preceding claims, wherein the substrate has a gas diffusion rate in a range from approximately 10⁻⁵ cm²/sec to approximately 10⁻⁹ cm²/sec, preferably from 10⁻⁷ cm²/sec to approximately 10⁻⁹ cm²/sec.

6. Sample carrier according to any one of the preceding claims, wherein the sample carrier comprises at least one liquid reservoir (8) and the channel is connected to the at least one liquid reservoir, in particular wherein the at least one liquid reservoir is arranged on the substrate of the sample carrier.

7. Sample carrier according to any one of the preceding claims, wherein the substrate and the at least one liquid reservoir are configured as one piece.

8. Method for treating a sample chamber for taking up a gas from a liquid, comprising the steps:
providing a sample carrier having a sample chamber (1 b) for a liquid (4), in particular according to any of the preceding claims, wherein at least one part inside the sample chamber comprises a gas-absorbing and/or gas-permeable plastics material (2, 12, 13),
**characterised by**
degassing at least one region of the gas-absorbing and/or gas-permeable plastics material in at least one region of the gas-absorbing and/or gas-permeable plastics material,
vacuum-packing the sample chamber under a vacuum atmosphere,
wherein the sample carrier comprises a substrate (7) in which the sample chamber is configured as a channel (9).

9. Method according to claim 8, wherein the degassing step comprises introducing the sample chamber into a predetermined gas environment, in particular with a low pressure or an excess pressure, in particular wherein the sample chamber is introduced into a predetermined gas environment for a predetermined period of time.

10. Method according to either claim 8 or claim 9, comprising the further step of arranging, particularly in a detachable manner, a semi-permeable or substantially impermeable material (5) on at least one part of the surface of the gas-absorbing and/or gas-permeable plastics material.

11. Method according to any one of claims 8 to 10, comprising the further step of packing the sample chamber in a gas-tight manner, in particular under a predetermined gas atmosphere.

## Revendications

1. Porte-échantillon avec une chambre à échantillon (1, 6) pour un liquide (4), étant précisé qu'au moins une partie à l'intérieur de la chambre à échantillon comprend une matière plastique (2, 12, 13) absorbant le gaz et/ou perméable au gaz,
**caractérisé en ce que**
la matière plastique absorbant le gaz et/ou perméable au gaz est globalement dégazée dans au moins une zone,
le porte-échantillon comprend un substrat (7) dans lequel la chambre à échantillon est conçue comme un conduit (9), et
le porte-échantillon est emballé sous vide.

2. Porte-échantillon selon la revendication 1, étant précisé qu'un matériau (5) semi-perméable ou globalement imperméable est disposé, en particulier de manière amovible, sur une partie au moins de la surface d'une matière plastique absorbant le gaz et/ou perméable au gaz.

3. Porte-échantillon selon l'une des revendications 1 ou 2, étant précisé que le porte-échantillon est en matière plastique.

4. Porte-échantillon selon l'une des revendications précédentes, étant précisé que le conduit présente un rapport de circonférence de section transversale sur la surface de section transversale d'environ 10-1000, de préférence de 20-250, plus spécialement de 50-100.

5. Porte-échantillon selon l'une des revendications précédentes, étant précisé que le substrat présente une constante de diffusion de gaz située dans une plage d'environ 10⁻⁵ cm²/s à environ 10⁻⁹ cm²/s, de préférence de 10⁻⁷ cm²/s à environ 10⁻⁹ cm²/s.

6. Porte-échantillon selon l'une des revendications précédentes, étant précisé que le porte-échantillon comprend au moins un réservoir de liquide (8) et le conduit est relié au(x) réservoir(s) de liquide, étant précisé en particulier que le ou les réservoirs de liquide sont disposés sur le substrat du porte-échantillon.

7. Porte-échantillon selon l'une des revendications précédentes, étant précisé que le substrat et le ou les réservoirs de liquide sont conçus d'une seule pièce.

8. Procédé pour traiter une chambre à échantillon pour recevoir un gaz à partir d'un liquide, avec les étapes suivantes :
préparation d'un porte-échantillon avec une chambre à échantillon (1, 6) pour un liquide (4), en particulier selon l'une des revendications précédentes, étant précisé qu'au moins une partie à l'intérieur de la chambre à échantillon comprend une matière plastique (2, 12, 13) absorbant le gaz et/ou perméable au gaz,
**caractérisé par**
le dégazage d'au moins une zone de la matière plastique absorbant le gaz et/ou perméable au gaz dans au moins une zone de ladite matière plastique absorbant le gaz et/ou perméable au gaz,
emballage sous vide de la chambre à échantillon sous atmosphère de vide,
étant précisé que le porte-échantillon comprend un substrat (7) dans lequel la chambre à échantillon est conçue comme un conduit (9).

9. Procédé selon la revendication 8, étant précisé que la phase de dégazage comprend l'introduction de la chambre à échantillon dans un environnement gazeux prédéfini, en particulier avec une dépression ou une surpression, étant précisé en particulier que l'introduction dans un environnement gazeux prédéfini a lieu pour une période prédéfinie.

10. Procédé selon l'une des revendications 8 ou 9 avec l'étape supplémentaire qui consiste à disposer, en particulier de manière amovible, un matériau (5) semi-perméable ou globalement imperméable sur une partie au moins de la surface de la matière plastique absorbant le gaz et/ou perméable au gaz.

11. Procédé selon l'une des revendications 8 à 10, avec l'étape supplémentaire d'un emballage étanche au gaz de la chambre à échantillon, en particulier sous une atmosphère gazeuse prédéfinie.
